# EUROPEAN PATENT SPECIFICATION

(11) **EP 0 680 216 B1**
(45) Date of publication and mention of the grant of the patent: **21.11.2007**
(21) Application number: 95105804.9
(22) Date of filing: 19.04.1995
(51) Int. Cl.: H04N 7/24, H04N 7/52

(54) **Apparatus and method for formulating an interactive signal**
Vorrichtung und Verfahren zum Formulieren eines interaktiven Signales
Appareil et méthode pour formuler un signal interactif

(30) Priority: 28.04.1994 US 234773; 28.04.1994 US 234139
(43) Date of publication of application: 02.11.1995
(73) Proprietor: OpenTV, Inc., San Francisco, CA 94111 (US)
(72) Inventor: Menand, Jean-Rene, Marina Del Ray, California 90292 (US); Jessup, Ansley Wayne, Jr., Willingboro, New Jersey 08046 (US); Joseph, Kuriacose, Plainsboro, New Jersey 08536 (US); Delpuch, Alain Michel, Los Angeles, California 90064 (US)
(74) Representative: Freeman, Jacqueline Carol

(56) References cited:
- EP-A- 0 306 208
- EP-A- 0 399 200
- EP-A- 0 403 140
- US-A- 5 168 356
- US-A- 5 251 301
- US-A- 5 289 276
- "Grand Alliance HDTV System Specification" DRAFT DOCUMENT SUBMITTED TO THE ACATS TECHNICAL SUBGROUP, FEB. 22, 1994. REPRINT FROM PROCEEDINGS OF THE ANNUAL BROADCAST ENGINEERING CONFERENCE, LAS VEGAS, MAR. 20 -24, 1994, no. CONF. 48, 22 February 1994, NATIONAL ASSOCIATION OF BROADCASTERS (NAB), XP002055175
- TSANG P H H ET AL: "THE MULTIMEDIA INFORMATION LINK CONTROL" PROCEEDINGS OF THE REGION TEN CONFERENCE (TENCON), BEIJING, OCT. 19 -21, 1993, vol. 1 OF 5, 19 October 1993, YUAN BAOZONG, pages 70-73, XP000463232

## Description

This invention relates to a system for composing a signal to be transmitted from for example a satellite, which signal includes video, audio, and interactive signals components as for interactive television.

Interactive television (TV) systems are known from for example United States Patent US-A-5,233,654. The system described in the '654 patent includes a receiver having a computer with sufficient storage to store interactive programs, albeit that provision is made to alter the programs with transmitted data. In order to make interactive TV less costly and therefore more attractive to consumer acceptance, it is desirable to keep memory in the receiver to a minimum. This may be achieved by regularly transmitting executable code for the desired applications, rather than requiring that the applications be continuously stored in the receiver. In effect the transmission media is utilized as a mass storage device.

The Grand Alliance HDTV System Specification (Draft Document submitted to the ACATS Technical subgroup, February 22, 1994) defines the syntax elements for the transport layer of the bitstream, and allows to mix video, audio, and auxilary data packets.

In the course of simplifying the receiver and consequently the interactive programs, it becomes necessary to transmit ancillary signals or programs to initiate certain functions at predetermined instances, such as at the interface of non-interactive program components which follow interactive program components. For example to suspend an interactive program during a non-interactive commercial.

The present invention is directed toward apparatus and a method for formatting executable codes and data, defining interactive applications, with video and audio program material, for reliable and convenient transmission.

The apparatus includes compressed audio and compressed video transport packets sources. A computer generates an interactive program associated with the compressed audio and video signals, the interactive program being formed of different modules, respective modules including executable codes or data, and including a directory module linking application modules. A transport processor apparatus is provided for packeting modules into transport packets and grouping transport packets from respective modules into transmission units, and forming auxiliary transport packets including header information for respective transmission units. Means are provided for assigning first identifier codes SCIDᵥ to respective video transport packets, second different identifier codes SCIDₐ to respective audio transport packets and third different identifier codes SCID_{D} to respective interactive program transport packets. A multiplexer time division multiplexes the interactive program transport packets with the audio and video transport packets, in such fashion that the interactive program is repeatedly included with the compressed audio and compressed video signals. The method includes forming transport packets of compressed audio signal with respective packets including a payload of audio signal data and an identifier SCIDₐᵢ for identifying the transport packet as containing audio component data. Transport packets of compressed video signal are formed with respective packets including a payload of video data and an identifier SCIDᵥᵢ for identifying the transport packet as containing video component data. An interactive application associated with the audio or video components is formed. The interactive application is segmented into modules similar to computer files, respective modules containing executable codes or application data. Respective modules are divided into one or more transmission units including integer numbers of transport packets, each transport packet including an identifier SCID_{Di} for identifying the transport packet as containing interactive component data, A further transport packet is generated for respective transmission units, the further transport packet including transmission unit header information describing the information contained in the respective transmission unit. And, the audio and video component packets are time division multiplexed with interactive component packets, said interactive component packets being in transmission unit sequence with respective transmission units headed by said further transport packet.

### BRIEF DESCRIPTION OF THE DRAWINGS

A detailed description of the invention is provided below with reference to the drawings wherein:
FIGURE 1 is a block diagram of an interactive TV signal forming system embodying the present invention;
FIGURE 2 is a flow chart illustrating the process of dividing the code/data bytes of a module into transmission units;
FIGURE 3 is a pictorial diagram showing the composition of a module;
FIGURE 4 is a pictorial representation of a transmission unit;
FIGURE 5 is a table indicating representative contents of a transmission unit header;
FIGURE 6 is a table illustrating representative contents of a directory module;
FIGURE 7 is a pictorial diagram showing the modular composition of an interactive application;
FIGURES 8 and 9 are signal waveforms representing alternative timing sequences for controlling time division multiplexing of A/V and module packets;
FIGURE 10 is a pictorial diagram of alternative sequences of time division multiplexed A/V and module packets;
FIGURES 11, 12 and 13 are pictorial diagrams of aspects of transport packets;
FIGURE 14 is a block diagram of representative apparatus for generating code/data transport packets; and
FIGURES 15, 16 and 17 are flow charts illustrating the process of forming transmission units and transport packets for respective modules.

The invention will be described in the environment of a compressed digital transmission system, as for example a direct broadcast satellite system. It will be presumed that a single satellite transponder will have sufficient bandwidth to accommodate a plurality of respective TV programs. The respective TV programs are temporally compressed and time division multiplexed onto the single transponder.

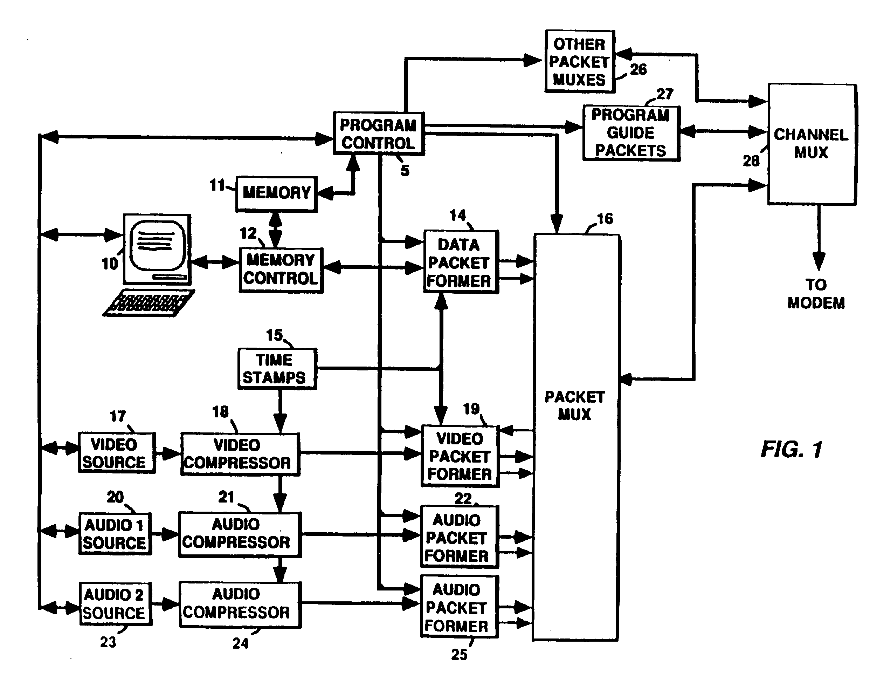

Referring to FIGURE 1, a packet multiplexer 16 provides, at its output port, an audio-video-interactive (AVI) program. Similar such devices 26 generative alternative AVI programs. A program guide, which includes information associating the audio, video and interactive components of respective AVI programs via SCID's, is provided in a transmission format similar to the AVI programs by a processing element 27. The program guide and respective AVI programs are applied in transport packet form to respective input ports of a channel multiplexer 28. The channel multiplexer 28 may be of known construction for equally time division multiplexing respective signals into a single signal or it may be a statistically controlled multiplexer. The output of the multiplexer 28 is coupled to a modem wherein it is conditioned for application to, for example a satellite transponder. The modem may include error coding and signal interleaving apparatus (not shown).

AVI formation is controlled by a system program controller 5. Program controller 5 may have a user interface by which particular programs and respective program signal components are selected. The program controller assigns respective SCID's for respective audio, video and interactive components of respective programs. The presumption is made that respective receivers will access a program guide to determine which SCID's associate AVI program components, and then select transport packets from the transmitted signal stream containing the associated SCID's. The audio, video and interactive components are assigned different SCID's so that one or more of the components of one AVI program may conveniently be utilized in the formation of alternate AVI programs. For example, consider that two similar TV game shows are being concurrently produced, and that it is desired that both be interactive using the same user interaction format. The same interactive component may be used simply by associating its SCID with both AVI programs, if the interactive component is substantially independent of the video program. Using Differing SCID's also facilitates editing audio from one program with video from another.

A given AVI program may include a variety of signal component sources. Shown in FIGURE 1 are an interactive component source 10, a video source 17, and first and second audio sources 20 and 23 (bilingual audio). The controller 5 communicates with respective sources for time management and/or enabling functions. The source of video signal 17 is coupled to a video signal compression apparatus 18, which may compress signal according to the video compression standard promoted by the Moving Pictures Experts Group (MPEG). Similarly the respective audio signals from the sources 20 and 23 are applied to respective compression apparatus 21 and 24. These compression apparatus may compress the respective audio signals according to the audio compression standard promoted by the Moving Pictures Experts Group (MPEG). Associated audio and video signals compressed according to the MPEG protocol are synchronized with the use of presentation time stamps (PTS), which are provided by a timing element 15. For insight into how the audio and video are temporally related the reader's attention is directed to INTERNATIONAL ORGANIZATION FOR STANDARDIZATION, ISO/IEC JTC1/SC29/WG11; N0531, CODING OF MOVING PICTURES AND ASSOCIATED AUDIO, MPEG93, SEPTEMBER, 1993.

The compressed audio and video signals are applied to transport packet formers 19, 22 and 25. Audio and video transport packet formers are known and will not be described. Suffice it to say that the packet formers divide the compressed data into payloads of predetermined numbers of bytes and attaches identifying headers including respective SCID's. For detailed information on a video signal transport packet former the reader is directed to United States Patent No. 5,168,356. The packer formers are coupled to the packet multiplexer for time division multiplexing the respective signal components. The transport packet formers may include a buffer memory for temporarily storing packetized data to accommodate the multiplexer servicing other components. The packet formers include PACKET READY signal lines coupled to the multiplexer to indicate when a packet is available.

Interactive programs are created, via known techniques, by a programmer operating the element 10, which may be a computer or personal computer (PC). The interactive program, hereinafter application, is compiled and condensed. By condensed is meant compressed or translated to a more compact language. Respective portions of the programs are segmented into modules of different types. Modules are similar to computer files. A first type of module is a code module which comprises executable code necessary to program a computing device at a receiver to perform or execute the application. A second module type is a data module. Data modules include non-executable data used in the execution of the application. Data modules tend to be more dynamic than code modules, that is data modules may change during a program while code modules generally will not change.

A third type of module is labeled a SIGNAL. This module is a special packet able to trigger interrupts. Signals can be used to synchronize an application to, for example, a particular video frame (for action games) or to alert an application of special events (end of application, for example). Synchronization is effected via inclusion of presentation time stamps. A programmed system function is performed when the signal time video presentation time stamp matches the signal module presentation time stamp.

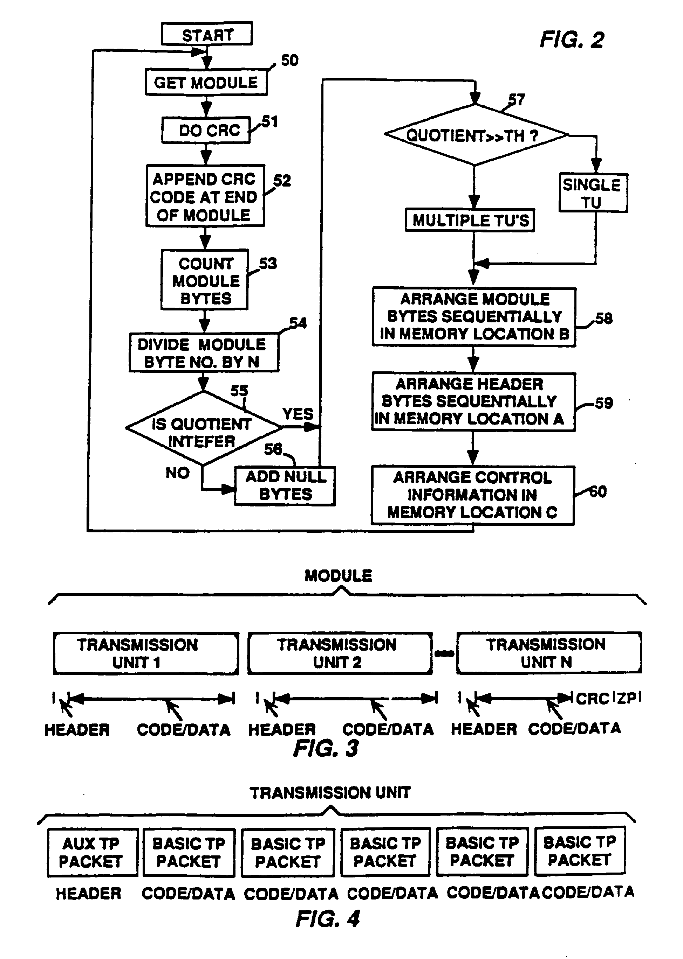

Once the respective modules are condensed, they are processed by the interactive component source 10 for transmission unit formation as illustrated in the flow graph of FIGURE 2. The module is accessed {50} from PC memory and subjected to error encoding {51}. Error check bits are generated and CRC check bits are concatenated or appended {52} to the end of the module data. The CRC check bits apply to the entire module, that is, in the preferred embodiment, error encoding is performed over the entire module, rather than in segments of the module. The number of bytes comprising a module are counted {53} and this number is divided {54} by a number N which is equal to the number of code/data bytes included in respective transport packets. The quotient is tested { 57 } to determine if the number of transport packets exceeds a threshold value representing a desired maximum number of packets per transmission unit. If the quotient exceeds the threshold, the packets will be divided into a plurality of transmission units (FIGURE 3). A transmission unit (TU) consists of an integer number of transport packets (FIGURE 4), one of which contains header information about the TU, and the others of which include a segment of the bytes of the module. Transmission units may contain equal or unequal numbers of transport packets. An optimum size TU has not been determined by the present inventors. However if an optimum size TU is P transport packets, then the quotient (plus 1 unit) determined in step 54 may be divided by P to establish the number of transmission units. In this instance there may be a number of TU's with P packets and a last TU with fewer packets. Alternatively the transport packets in the module may be equally divided into equal sized TU's.

A test is performed {55} to determine if the module contains an integer number of transport packets. If there are insufficient bytes in the module to fill the last transport packet, the last transport packet is zero padded (56) with null words. The condensed module is then stored {58} in the memory 11 at a predetermined memory area.

The size of a transmission unit is determined at the discretion of the application programmer. Modules are broken into transmission units because an AVI may contain alternative functional applications and thus alternative modules which may be selected by respective receiver users. Ones of these alternative modules may be relatively short. To preclude a user desirous of using a shorter program from having to wait for transmission of a longer program, the respective modules are broken into pieces (TU's) and the TU's of the different modules may be interleaved. This process can significantly lessen the time required to receive one of a number of alternative modules.

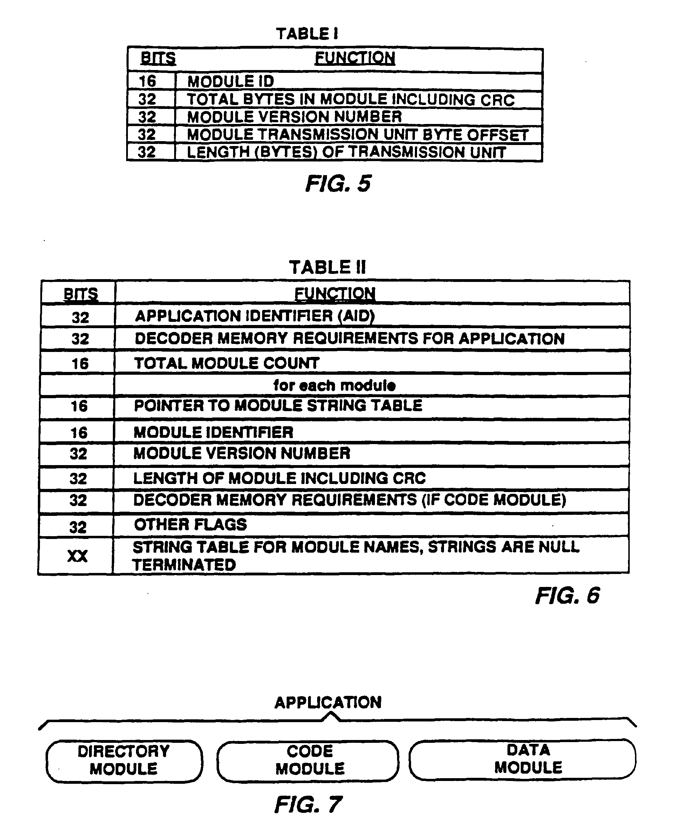

Table I, shown in FIGURE 5, lists exemplary types of header information included in each TU header packet. Note that the header includes a version number. The version number is included to indicate when a change is made to the application during the presentation of the AVI. A receiver decoder can be arranged to update an executing application responsive to detecting a change in version number. The Module ID is similar to a computer file identifier and is provided by the application programmer. The Module Transmission Unit Byte Offset is a number which indicates the byte location in the module of the first code/data byte of the payload of the TU. For example if each TU includes 8 code/data transport packets, and a code/data transport packet includes 127 code/data bytes, the i^{th} TU may have a Module Transmission Unit Byte Offset of 8 x 127 x (i). The Length (bytes) Of Transmission Unit, if less than 8 x 127, indicates that the TU is the last TU of a module, and also indicates the location of the last code/data byte in the TU.

The TU header information of Table I is compiled by the interactive component source 10 and stored {59} in another area in the memory 11 by a memory controller 12. Information for forming a directory is also stored {60} in memory 11.

After formation of the application and processing of the modules, the interactive component source 10, under the control of the application programmer, forms a directory module which interrelates the application modules for the benefit of the receiver application hardware. Table II of FIGURE 6 indicates representative types of data included in the directory module. The Directory module includes a header with an Application identifier, AID, a field which indicates the amount of memory required to store and execute the application, and a field indicating the number of modules contained in the application. The data portion of the Directory Module includes data for each module similar to the header data for the respective modules. In addition there is a string table which is a list of respective application module names in ASC11 format.

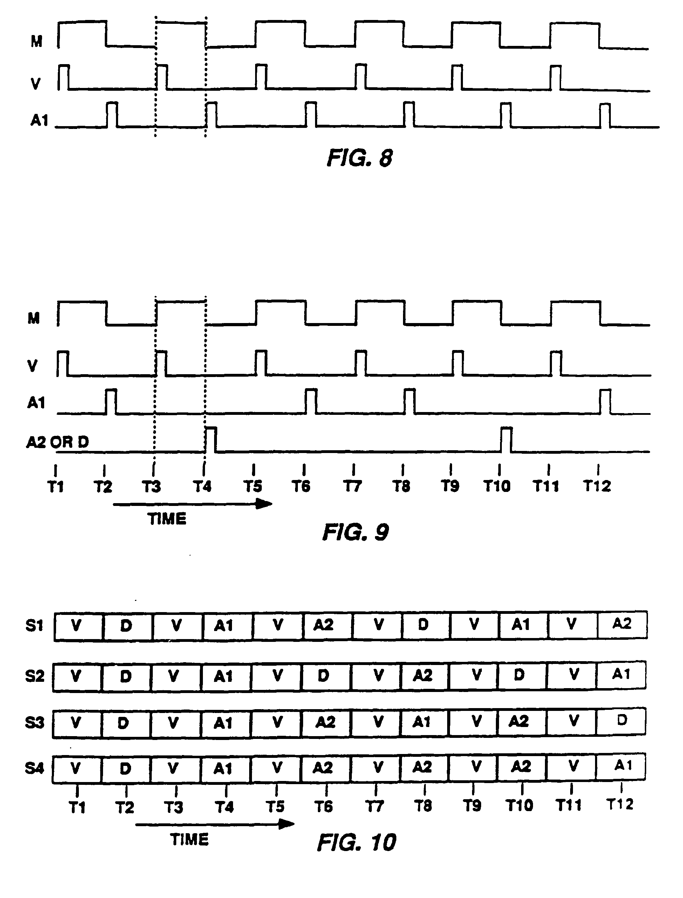

The Directory Module information is stored in a third predetermined area of the memory 11. The interactive component source 10 may be programmed to generate the actual transmission units and transport packets, however in the embodiment of FIGURE 1, a separate code/data packet former 14 is included. The code/data packet former accesses the respective areas of the memory 11 through the memory controller 12 and generates packets in a sequence representing a respective application (FIGURE 7). The sequence for respective modules and TU's are shown in FIGURES 3 and 4 respectively. The packets provided by the packet former 14 are coupled to the packet multiplexer 16.

The packet multiplexer 16 is arranged to provide packets according to a particular schedule. The video component of a typical AVI program requires the largest channel bandwidth, and the multiplexer rate is determined as a function of the required video bandwidth. That is, in order to provide images at thirty frames per second requires an average minimum video packet rate of P packets per second. P is determined by the encoded image spatial resolution and image aspect ratio etc. To satisfy this requirement and to include audio and application components, the exemplary system of FIGURE 1 is arranged to multiplex 2P packets a second. FIGURES 8, 9 and 10 illustrate alternative packet multiplexing formats.

The multiplexing format of FIGURE 8 presumes that the program components include only a video and one audio component, as in a typical TV program. The waveform M illustrates the multiplexing rate, with one packet being passed by the multiplexer for each transition of the waveform M. The waveforms V and A1 represents the timing of multiplexed video and audio packets respectively. In this example audio and video packets alternate. It will be appreciated, however that audio packets will not traditionally occur at a rate as high as the video packets. If audio packets do not occur at the audio multiplexing rate, the multiplexer may be arranged to simply not pass an audio packet in the audio multiplex time slot, or to repeat the last audio packet. If the channel multiplexer 28 is a statistical multiplexer, it will be preferable not to pass an audio packet when an original packet is not available. This is easily arranged by causing the packet ready signal generated by the audio packet former to inhibit the multiplexer during audio packet multiplex time slots when audio packets are not available.

The multiplexing format of FIGURE 9 presumes that the program components include a video component, an audio component A1, and a second audio component A2 or an interactive data component 0. In this multiplexing sequence, a video packet is passed for every second transition of the multiplexing signal M. During alternate transitions of the multiplexing signal the other two components are alternated. Video packets are passed at times T1, T3, T5, T7, T9, etc. Audio A1 is passed alternately with A2 or Data D. Audio A1 is passed at times T2, T6, T8, and T12. Audio A2 or D is passed at times T4, T10. In this sequence it has been presumed that a packet of A2 or D was not available at time T8 and the multiplexer substituted an available packet of A 1. Thereafter the A1 and A2 or D packets were alternated.

Regarding the prioritization of packet multiplexing during the non-video packet multiplexing time slots, if a priority is imposed, it is preferred that the signal component with packets that occur very infrequently be assigned a higher multiplexing priority.

FIGURE 10 illustrates a number of alternative component multiplexing sequences, all of which assume that video packets be passed every other packet multiplexing time slot. The sequence S1 presumes video, first and second audio and a data components. The first and second audio and the data D component packets are shown regularly alternated during even numbered time periods. The sequence S2 also presumes video, first and second audio and a data components. However in this sequence, it is assumed that the data D requires a relatively high signal bandwidth. A data packet D is indicated as being allotted every other even time period with the audio components alternating in the remaining even numbered time periods. Sequences S3 and S4 assume that the audio components require significantly more bandwidth than the data component and thus are shown to have been allotted a greater percentage of the even numbered multiplex time periods. More than one module may be concurrently transmitted. If they are transmitted concurrently, it is recommended that transport packets from TU's of different modules not be interleaved in the packet multiplexing process. However, entire TU's from different modules may be interleaved.

The specifics of the packet multiplexer 16 will not be described because multiplexing is a mature art and those skilled in digital signal processing will readily be able to design a multiplexer to satisfy their particular requirements.. Suffice it to say that the packet multiplexer 16 may be arranged using three state logic switches with input ports coupled to the respective component signals and their output ports coupled to the multiplexer output port. A state machine may be arranged to control the logic switches responsive to priorities established by the controller 5 and the respective packet ready signals provided by the packet formers.

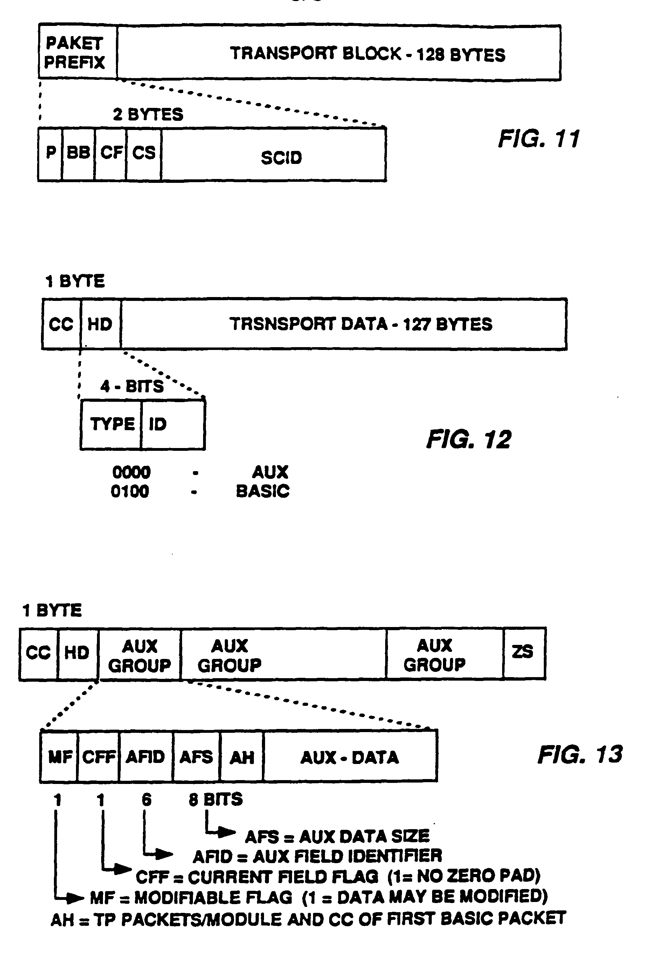

FIGURE 11 illustrates an exemplary form of the AVI packets. The Packets include a link layer which conveys a prefix, and a service layer or transport block which may be customized for the particular service. The prefix conveyed in the link layer is a two byte field which includes four one-bit signals P, BB, CF, CS, and a twelve-bit field for the SCID. The signals P, BB, CF, and CS are packet framing bit, a bundle boundary bit, a control flag for a packet scramble key , and control synchronization for the scramble key. Exemplary coding of the CF and CS fields is according to the relations:

| CF | CS | function |
|---|---|---|
| 0 | 0 | Use even key |
| 0 | 1 | Use odd key |
| 1 | 0 | Packet unscrambled |
| 1 | 1 | Packet unscrambled |

The service layer or transport block is illustrated in FIGURE 12. It includes a one-byte header and a 127-byte code/data payload. The header includes a four bit field for a modulo 16 continuity count (CC) and a four bit service type identifier HD. For the interactive code/data packets two service types are utilized which are identified by the four bit HD field according to the following convention:

| | |
|---|---|
| 0000 | AUX PACKET |
| 0100 | BASIC PACKET |

The transport block of the basic packet simply includes the HD byte followed by 127 bytes of module codewords. The basic packets are utilized to transport the codewords of respective modules, but not the transmission unit header information. The TU header data and any module header data are conveyed in auxiliary (AUX) packets. FIGURE 13 illustrates the form of the service layer of exemplary AUX packets.

The AUX packet service layer includes the One-byte header with the CC and HD data. The CC value for all AUX packets is a unique value such as 0000. The remaining 127 bytes of payload are divided into one or more variable sized auxiliary groups. Each auxiliary group includes a two-byte header field containing two flags MF and CFF, an auxiliary field identifier AFID, and a number AFS indicating the amount of auxiliary data that follows in a variable length AUX data field. The flag MF indicates whether the data in the AUX data field is modifiable or not and the flag CFF indicates if the AUX data field is zero padded. One of the auxiliary groups will be arranged to convey the TU header data. This particular auxiliary group will include an additional header, AH, which contains a 16-bit field indicating the number of packets in the transmission unit and a second 8-bit field containing the CC value of the first basic packet in the transmission unit.

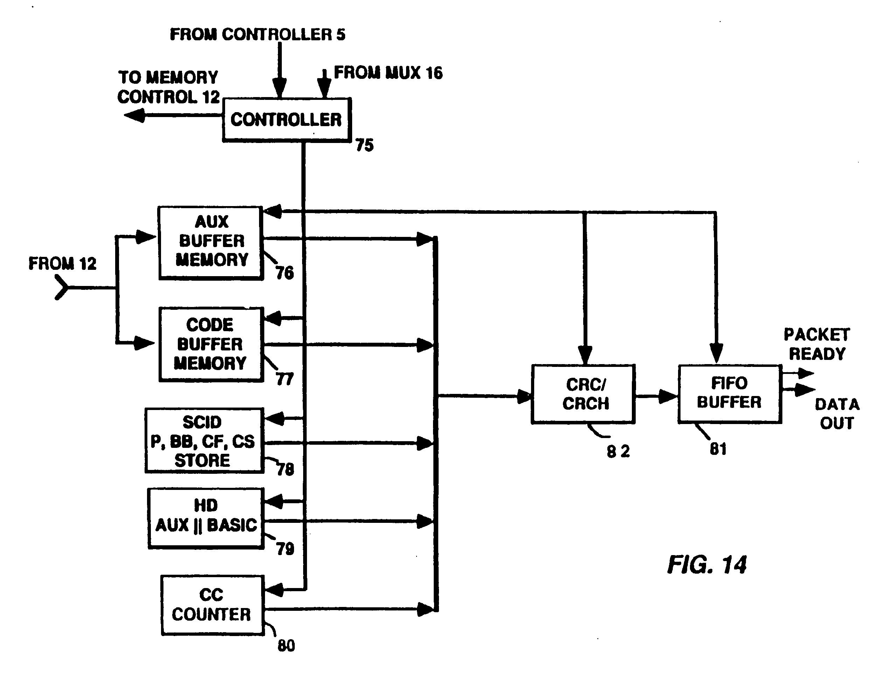

FIGURE 14 shows an exemplary embodiment of a code/data transport packet former 14. The packet former includes a controller 75 which controls the functional sequencing of packet formation, and communicates with the system program controller 5, the memory controller 12 and the packet multiplexer 16. The controller 75 receives the appropriate SCID's from the program controller 5 and stores them in a storage element 78 along with other packet prefix data. The controller 75 communicates with the memory 11 via memory controller 12 to access application code/data which is then applied to one of two buffer memories 76 and 77. Header data which is to be conveyed in AUX packets is applied to the buffer 76, and data which is to be conveyed in basic packets is stored in the buffer 77. A further storage element 79 is used to store service layer header data HD, and CC counter 80 is included for completeness. Alternatively the storage elements 78 and 79 may be part of memory internal to the controller 75 and the continuity counter 80 may be realized in software in the controller 75.

Output ports of the respective elements 76-80 are realized with three state logic devices, all of which are connected to a common output bus. Packet data is accumulated in the respective elements 76-80 and applied to the output bus in a packet forming sequence under the control of controller 75.

The bus is coupled to an error coding unit 82. Error coding unit 82 generates cyclic redundancy header error check bits (CRCH) over the auxiliary group of respective AUX packets that includes the AH header and concatenates or appends the CRCH to the Aux packet. More particularly the CRCH coding is performed over the auxiliary group data field and AH header but not the auxiliary group header. The CRCH error check bits are appended to the auxiliary group. The error coding unit may also be conditioned to generate CRC error codes over information included in the service layer of basic packets, and to append or concatenate the CRC error codes to the respective basic packets. The packets are then applied to a buffer memory 81 which may be a first in first out FIFO memory. When a complete packet is stored in the FIFO 81, a packet ready signal is generated. The data output port of the FIFO and the packet ready signal are connected to the packet multiplexer 16.

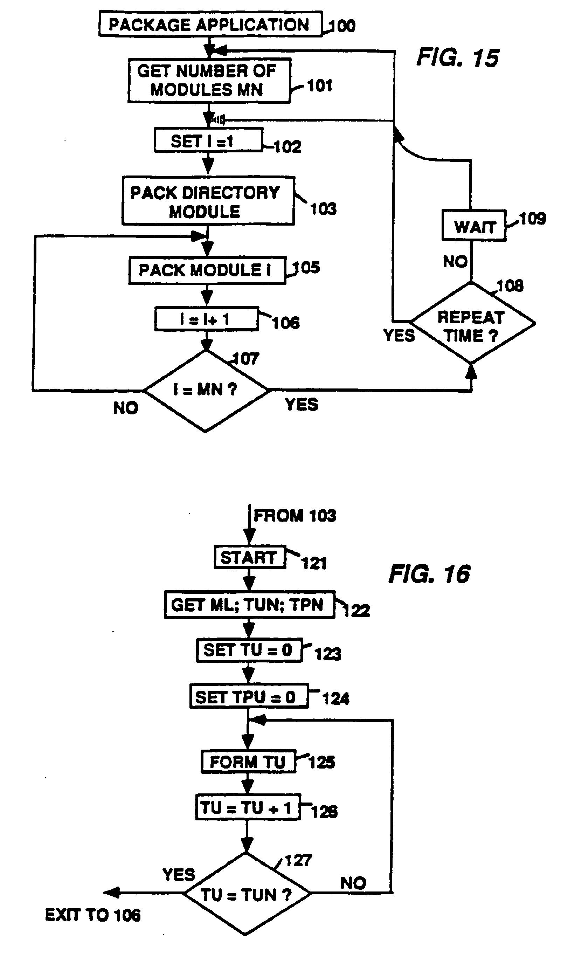

FIGURES 15, 16 and 17 are flow charts illustrating in progressively greater detail the code/data packeting process. Before discussing these flow charts several acronyms will be defined. These are:

| | |
|---|---|
| TU ≡ Transmission Unit; | TP ≡ Transport Packet; |
| CC ≡ Continuity Count; | TPN ≡ Number of TP's in TU; |
| TUN ≡ Number of TU's in module; | ML ≡ Length Of Module (bytes); |
| TPU ≡ Running index of bytes packeted in a TU in units of 127. | |

FIGURE 15 illustrates the general process by which the packet former packages respective applications. Recall that the transmission media is to be utilized as application storage, thus the application will be repeatedly transmitted, i.e., packeted. The program controller initiates {100} packaging of an application. Subject to this command the controller 75 accesses {101} from memory 11, the number, MN, of modules in the current application, and the module header information, and stores same in the buffer 76. An index i is set {102} to 1. The Directory module is packeted {103}. The first application module is then packeted {105}. Index i is incremented one unit {106}, which is a count of the modules packeted. A test {107} determines if the last module of the application has been packeted. If the last module of the application has not been packeted, the system progresses to step {105} and packets the next module. On the other hand, if the last application module has been packeted, a test {108} determines if the application repeat time has elapsed. If it has, the system returns to step {101}, or to step {102}, to begin repackaging (to retransmit) the application. Alternatively, if the repeat time has not elapsed, the system waits {109}, before repackaging the application.

FIGURE 16 illustrates the module packet formation. This subroutine is initiated {121} by sourcing {122} from the buffer memory 76, the length, MN, of the module in bytes, the number, TUN, of transmission units in the module, and the number, TPN, of transport packets in the respective transmission units. A TU index is set {123} to zero and a further running total index TPU is set {124} to zero. A transmission unit is formed {125} which consists of forming a TU header AUX packet, followed by TPN-1 basic packets with application code/data. The index TU is incremented one unit {126} and tested {127} to determine if the last TU in the module has been completed. If it has not, the system progresses to step {125}. If the last TU of the module has been completed the routine is exited.

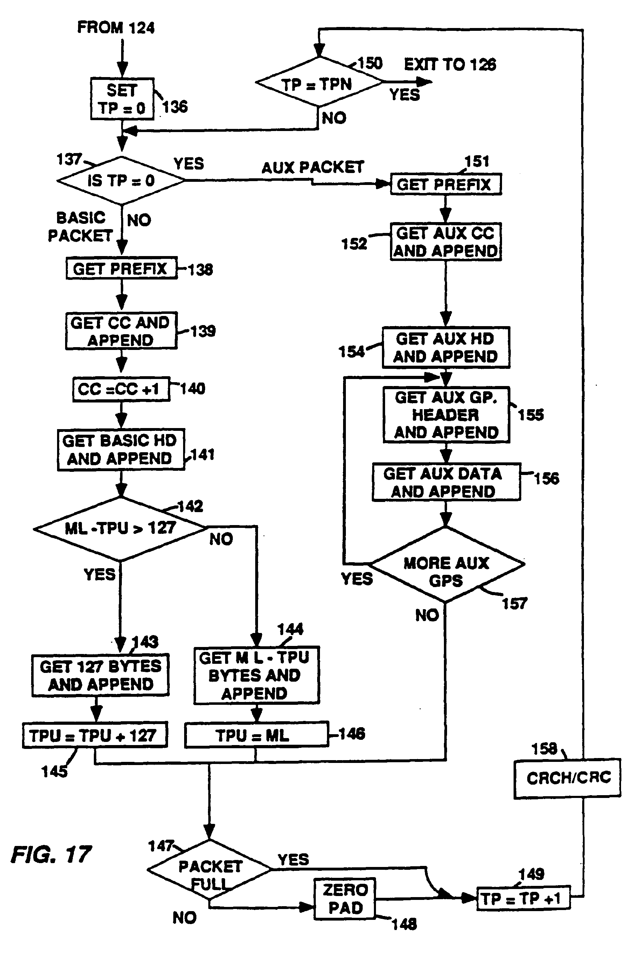

FIGURE 17 shows the process {125} for TU generation. At the beginning of each TU, a Transport number index TP is set {136} to zero. The index TP is tested {137}. If the index TP is zero, a TU header AUX packet is formed {151-157}, else a basic packet is formed {138-146}. For AUX packet formation, the link layer prefix including the SCID is accessed {151} from memory. The fixed AUX CC value is also accessed {152} and appended to the prefix. The AUX packet service layer header HD is next accessed {154} and appended after the prefix and AUX CC. An auxiliary group header is formed or accessed {155} from memory and appended after the prefix, CC and header HD. The AH header data is calculated and appended after the auxiliary group header. AUX data associated with the auxiliary group header is accessed {156} from memory and appended after the AH header. A test {157} is made to determine if further auxiliary groups are to be included in the AUX packet. If there are further auxiliary groups, the system progresses to step {I55}. If not it progresses to step 147.

If a basic packet is to be formed, i.e., TP is not equal to zero, the appropriate prefix data {138} and the CC {139} are accessed from memory or the controller 75, and the CC is appended to the prefix. The CC is incremented one unit {140}. The basic packet service layer header HD is sourced and appended {141} to the CC. The index TPU is subtracted from the module length and tested {127} to determine if there are a full packets worth of module bytes remaining to be packeted. If there are, a packets worth of bytes (127 bytes in this example) are sourced {143} from the memory 77, and appended to the HD. The index TPU is incremented {145} by 127.

Alternatively, if there are less than a full packet of bytes remaining in the module, the remaining module bytes are accessed and appended {144} to the header HD. The index TPU is set to ML {146} and a packet-not-full flag is set.

After respective packets are formed, (AUX or basic) they are tested {147} to determine whether they are filled. If not they are zero padded {148} to the requisite number of bytes(127). The index TP is incremented {148} one unit. The basic packets may be optionally CRC error coded {158}, however this is somewhat duplicative of the error coding performed over the entire module. Such CRC error coding may be applied at least to the application data portion of the respective packets, and/or the service layer header (CC and HD). If a CRC is performed, the CRC error check bits will be appended to the packet data bytes.

AUX packets are CRC error coded over the auxiliary group data field and the auxiliary header AH, and CRCH error bits are appended to the auxiliary group.

The index TP is tested { 150} to determine if the last packet of the TU has been processed. If not, the next packet is formed {137-149}. If it has the system exits to step 126.

The foregoing process packages modules ad seriatim. Note however that the application composer can easily arrange to interleave portions (TU's) of modules after compilation of the application; and then arrange quanta of data with indicators whether the quanta of data are to be packaged in basic or AUX packets. In this instance the packet former, responsive to such indicators will form associated data in AUX or basic packets.

Applications for AVI programs are repeatedly transmitted. The periodicity of re-transmission is determined by the programmer, and is a function of the bandwidth of the channel, the bandwidth needs of higher priority AVI components, the total data included in the application, and buffer memory size in the decoders. The re-transmission of the application may be effected by arranging the timing of the packet multiplexer to allot predetermined multiplexing periods to the application at a rate which will produce the desired application re-transmission rate.

There are instances in which undesirable displays may be produced by an interactive program. Consider the instance where an interactive program occasions the display of an overlay image atop the associated video. Assume that a non-interactive commercial is included in the video. The interactive program may have no means of determining that the video source changed and may undesirably continue to display the overlay image on the commercial.

If a new interactive program occurs, the directory will change, and this change will alert the receiver to a program change. Nominally such a change will cause the receiver to dump the current program in favor of the new program. However, it may occur that the new program requires very little memory space and it is intended to revert to the old program in a very short interval. In this instance it is more desirable to simply suspend execution of the present program rather than dump it, as the delay in re-recovering the application may be undesirably long. There may also be instances when an application can not know when to terminate an application or when to resume execution of an application. All of these situations may be addressed with the use of signal modules.

A signal module may be a data module or an executable program. If the former, it may contain a simple time or other type of code to condition a current application to respond in a predetermined manner, for example, self termination, or suspension of execution, or resumption of execution etc. If the latter, it may be a program to condition a receiver to store the current status of the application it was executing, and then to dump the present application in favor of a newly transmitted application, or to suspend execution of the present application and remove it from memory, or to merely suspend execution etc.

The timing or synchronization of the signal packets with associate video or audio, may be effected in several ways. Firstly it may be programmed to be executed on the occurrence of a particular start or header etc., code of the associated audio or video signal. Secondly, it may include a PTS (presentation time stamp) and be programmed to be executed when a like PTS occurs in the audio or video data, or within a predetermined interval of a like PTS in the audio or video data. Thirdly, it may be programmed to be executed immediately upon reception. In the first two cases, the location of a signal packet in the packet stream is not critical as long as its reception occurs before the programmed event. In the third case, the signal program packet location is rather critical in effecting the desired result.

Consider that an AVI program is segmented if it is composed of respective parts which are associated with different interactive programs, or with non-interactive programs. A program which has a first part which is associated with an interactive program, a second part which is a non-interactive commercial, and a third part which is a continuation of the first part with associated interactive program has three segments. If the signal module is to effect a program change (e.g. suspension of execution at the beginning of the commercial) by the third method, it must be situated in the program stream sufficiently prior to the occurrence of the second segment so that the receiver has time to respond to the signal program at the occurrence of the second segment.

Signal modules which contain a simple control word or sequence may be contained in a single packet which comprises the entire module including directory and header. This single packet is an auxiliary packet which will create a process interrupt upon reception by the receiver. Responsive to the interrupt the receiver will initiate the appropriate action indicated by the signal module. If the signal module is an executable program it may contain a plurality of packets, but the header packet of the module will be an auxiliary packet. In this instance the auxiliary packet will also cause a receiver interrupt to initiate appropriate action.

If the system illustrated in FIGURE 1 is generating interactive programs of segmented video, the programmer operating the system can control the interactive component source 10 to create the appropriate signal modules which will then be inserted into the signal stream by the program controller 5, at appropriate instances. Alternatively, consider a facility for editing a number of prerecorded AVI and/or non-AVI programs to generate, for example, an AVI program with segmented video signal by selecting segments of programs from a plurality of stored signals. In this instance, the editing apparatus may include a further storage element containing a selection of prepacketed signal modules. At interfaces between respective program segments of the edited program product, the editor will select the appropriate prepacketed signal module, and insert same in the edited product. In fact, selected prepacketed signal modules may be repetitively inserted at predetermined intervals. Repetitive insertion may be used to enhance the probability of reception and/or may be used as an implicit signal. In the latter instance a receiver may be programmed to perform certain functions indicated by the signal module only if the signal module repeats with predetermined frequency. When the frequency is broken the receiver may be programmed to revert back to processing in the mode utilized immediately prior to reception of signal module.

In the claims that follow the term "segmented video signal" means a video signal composed of respective portions or segments, ones of which are associated with interactive programs and ones of which are associated with different interactive programs or not associated with interactive programs.

## Claims

1. Apparatus for generating an interactive audio/visual program **characterized by**:
a source (18) of transport packets of compressed video signal;
a source (21) of transport packets of compressed audio signal;
a computer (10) for generating an interactive program associated with said compressed audio and video signals, said interactive program being formed of a plurality of different modules, said modules including executable, codes or data, and of a directory module linking said modules of executable codes or of data;
a transport processor apparatus (14) for packetizing each of said modules into interactive program transport packets and grouping interactive program transport packets from respective modules into transmission units, said transport processor apparatus (10) forming auxiliary transport packets including header information for each of said transmission units;
means (5) for assigning first identifier codes SCIDᵥ, to respective video transport packets, second different identifier codes SCIDₐ, to respective audio transport packets, and third different identifier codes SCID_{D}, to respective interactive program transport packets;
a multiplexer (16) for time division multiplexing said interactive program transport packets with said audio, and video transport packets in such fashion that said interactive program is repeatedly included with said compressed audio and compressed video signals.

2. The apparatus set forth in claim 1 further **characterized by** an error coding apparatus for independently error coding said header information for respective transmission units in said auxiliary transport packets.

3. The apparatus set forth in claim 2 **characterized in that** transmission units of more than one module may be concurrently available, and said transport processor is conditioned to interleave complete transmission units from different modules, but inhibited from interleaving transport packets from different transmission units.

4. The apparatus set forth in claim 1 **characterized in that** said transport processor is conditioned to provide said directory module, transmission units of modules of executable codes, and transmission units of modules of data in the order recited.

5. The apparatus set forth in claim 1 **characterized in that** said transport processor forms transmission units from integer numbers of transport packets, and transport packets of a transmission unit for which there is insufficient module data, are filled with null words.

6. The apparatus set forth in claim 1 further **characterized by** a continuity counter for counting modulo N, N being a positive integer, successive transport packets containing module data except said auxiliary transport packets, said transport processor including associated successive count values in said transport packets, and including a predetermined count value in all auxiliary transport packets.

7. The apparatus set forth in claim 1 further **characterized by** error coding means (79) for generating error check bits over respective said modules and concatenating error check bits to corresponding modules.

8. The apparatus set forth in claim 1, further **characterized by**;
a source of signal modules for conditioning a receiver apparatus to suspend or renew processing of interactive programs;
wherein said transport processor apparatus (14) packets said modules; and
said multiplexer (16) time division multiplexes said interactive program transport packets with associated packets of compressed audio signal and corresponding segments of said compressed video signals, and including packets of signal modules correlated with changes of segments of said compressed video signals and programmed to affect the execution of an interactive program associated with a segment occurring prior to a respective segment change.

9. The apparatus set forth in claim 8 **characterized in that** said compressed video signal includes first and second successive segments, said first segment being associated with an interactive program, and said second segment being not associated with an interactive program, and said multiplexer is conditioned to include a signal module containing codewords which will condition said receiver apparatus to suspend processing of said interactive program associated with said first segment on the occurrence of said second segment.

10. The apparatus set forth in claim 8 **characterized in that** said compressed video signal includes first and second successive segments, said first segment being associated with a first interactive program, and said second segment being associated with a second interactive program, and wherein said multiplexer is conditioned to include a signal module containing codewords which will condition said receiver apparatus, on the occurrence of said second segment, to store processing status data relating to the current state of processing of said first interactive program, then to remove said first interactive program and load and execute said second interactive program.

11. The apparatus set forth in claim 8 **characterized in that** said source of signal modules is said computer which inserts time stamps in said signal modules, which time stamps are associated with particular frames of said compressed video signal, to synchronize execution of said signal module with a change of segments of said compressed video signal.

12. A method for the transmission of audio, video, and interactive components of an audio-video-interactive application **characterized by**:
forming transport packets of compressed audio signal with respective packets including a payload of audio signal data and an identifier SCIDₐᵢ for identifying the transport packet as containing audio component data;
forming transport packets of compressed video signal with respective packets including a payload of video data and an identifier SCIDᵥᵢ for identifying the transport packet as containing video component data;
generating an interactive application associated with the audio or video components;
segmenting the interactive application into modules, respective modules containing executable codes or application data;
dividing respective modules into one or more transmission units including integer numbers of transport packets, each transport packet including, an identifier SCID_{DI} for identifying the transport packet as containing interactive program components
generating a further transport packet for each respective transmission unit, said further transport packet including a transmission unit header describing the information contained in the respective transmission unit; and
time division multiplexing the audio, and video component packets with interactive application component packets, said interactive application component packets being in transmission unit sequence with respective transmission units headed by said further transport packet.

13. The method set forth in claim 12, **characterized in that** said SCID_{Di}, SCIDₐᵢ, and SCIDᵥᵢ are different values.

14. The method set forth in claim 12 **characterized in that** said further packet is an auxiliary transport packet and the method of generating an auxiliary transport packet includes;
providing said SCID_{DI}, a predetermined fixed continuity count value CC, and an auxiliary packet type data-word HD, and concatenating the count value CC and the auxiliary packet type data-word HD, to the identifier SCID_{Di};
generating an auxiliary group including an auxiliary group data field and an auxiliary group header, said auxiliary group header including a codeword AFID identifying data included in said auxiliary group data field, and a field AFS indicating the number of bytes of data in said auxiliary group data field, and concatenating the auxiliary group header to said SCID_{Di}, CC and HD data; and
including said transmission unit header information in said auxiliary group data field.

15. The method set forth in claim 14 **characterized in that** the method of generating an auxiliary transport packet further includes;
generating further auxiliary group header fields, AH, including a first field which indicates the number of transport packets in the corresponding transmission unit, and a second field indicating the continuity count value of the first transport packet of a transmission unit after the occurrence of said auxiliary transport packet.

16. The method of claim 12 further **characterized by** the step of, interleaving whole transmission units of different modules exclusive of interleaving respective transport packets of different transmission units.

17. The method set forth in claim 12 further
**characterized by**;
forming a directory module which includes data indicating the modules included in an application;
forming the directory module into a transmission unit and transport packets; and
time division multiplexing the directory module with the audio, and the video component packets before multiplexing modules of said interactive application.

18. The method set forth in claim 17 further **characterized by**, repeatedly multiplexing transmission units of said directory module and said application modules, with said audio and video components, as an audio-video-interactive application.

19. The method set forth in claim 12 or 14 further **characterized by**, error coding each said module and concatenating error check bits to each such module.

20. The method according to claim 12, **characterized by**
generating signal modules for conditioning receiver apparatus to suspend or renew processing of said interactive program;
forming transport packets of said interactive application and of said signal modules; and
time division multiplexing the audio, and video component transport packets with associated interactive application transport packets, and inserting signal module transport packets correlated with changes of segments of segmented video signal to condition respective receivers to suspend or resume an interactive application at respective segment changes.

21. The method according to claim 20, **characterized by**
error coding said signal files and interactive program files and concatenating error check bits to corresponding error coded files.

## Patentansprüche

1. Vorrichtung zum Erzeugen eines interaktiven Audio/Video-Programms, die **gekennzeichnet ist durch**:
eine Quelle (18) von Transportpaketen von komprimierten Videosignalen;
eine Quelle (21) von Transportpaketen von komprimierten Audiosignalen;
einen Computer (10) zum Erzeugen eines interaktiven Programms in Verbindung mit den genannten komprimierten Audio- und Videosignalen, wobei das genannte interaktive Programm aus mehreren unterschiedlichen Modulen gebildet ist, wobei die genannten Module ablauffähige Codes oder Daten beinhalten, und aus einem Verzeichnismodul, das die genannten Module von ablauffähigen Codes oder Daten verknüpft,
eine Transportprozessorvorrichtung (14) zum Paketieren der einzelnen genannten Module zu Transportpaketen des interaktiven Programms und zum Gruppieren von Transportpaketen des interaktiven Programms von jeweiligen Modulen zu Übertragungseinheiten, wobei die genannte Transportprozessorvorrichtung (10) zusätzliche Transportpakete mit Kopfinformationen für jede der genannten Übertragungseinheiten bildet;
Mittel (5) zum Zuordnen von ersten Kennungscodes SCIDᵥ zu jeweiligen Videotransportpaketen, zweiten, unterschiedlichen Kennungscodes SCIDₐ zu jeweiligen Audiotransportpaketen, und dritten, unterschiedlichen Kennungscodes SCID_{D} zu jeweiligen Transportpaketen des interaktiven Programms;
einen Multiplexer (16) zum Zeitmultiplexieren der genannten Transportpakete des interaktiven Programms mit den genannten Audio- und Videotransportpaketen auf eine solche Weise, dass das genannte interaktive Programm wiederholt in den genannten komprimierten Audio- und komprimierten Videosignalen enthalten ist.

2. Vorrichtung nach Anspruch 1, ferner **gekennzeichnet durch** eine Fehlercodiervorrichtung zum unabhängigen Fehlercodieren der genannten Kopfinformationen für jeweilige Übertragungseinheiten in den genannten zusätzlichen Transportpaketen.

3. Vorrichtung nach Anspruch 2, **dadurch gekennzeichnet, dass** Übertragungseinheiten von mehr als einem Modul gleichzeitig verfügbar sein können und der genannte Transportprozessor so konditioniert ist, dass er komplette Übertragungseinheiten von unterschiedlichen Modulen verschachtelt, aber keine Transportpakete von unterschiedlichen Übertragungseinheiten verschachteln kann.

4. Vorrichtung nach Anspruch 1, **dadurch gekennzeichnet, dass** der genannte Transportprozessor so konditioniert ist, dass er das genannte Verzeichnismodul, Übertragungseinheiten von Modulen von ablauffähigen Codes und Übertragungseinheiten von Modulen von Daten in der angegebenen Reihenfolge bereitstellt.

5. Vorrichtung nach Anspruch 1, **dadurch gekennzeichnet, dass** der genannte Transportprozessor Übertragungseinheiten von ganzzahligen Mengen von Transportpaketen bildet, und Transportpakete einer Übertragungseinheit, für die nicht genügend Moduldaten vorhanden sind, mit Nullwörtern gefüllt werden.

6. Vorrichtung nach Anspruch 1, die ferner **gekennzeichnet ist durch** einen Kontinuitätszähler zum Zählen von Modulo N, wobei N ein positive ganze Zahl ist, wobei aufeinander folgende Transportpakete Moduldaten enthalten, mit Ausnahme der genannten zusätzlichen Transportpakete, wobei der genannte Transportprozessor assoziierte aufeinander folgende Zählwerte in den genannten Transportpaketen beinhaltet und einen vorbestimmten Zählwert in allen zusätzlichen Transportpaketen beinhaltet.

7. Vorrichtung nach Anspruch 1, ferner **gekennzeichnet durch** Fehlercodiermittel (79) zum Erzeugen von Fehlerprüfbits über jeweiligen genannten Modulen und Verketten von Fehlerprüfbits mit entsprechenden Modulen.

8. Vorrichtung nach Anspruch 1, die ferner **gekennzeichnet ist durch**:
eine Quelle von Signalmodulen, um eine Empfängervorrichtung so zu konditionieren, dass sie die Verarbeitung von interaktiven Programmen unterbricht oder erneuert;
wobei die genannte Transportprozessorvorrichtung (14) die genannten Module paketiert; und
der genannte Multiplexer (16) die genannten Transportpakete des interaktiven Programms mit assoziierten Paketen von komprimierten Audiosignalen und entsprechenden Segmenten der genannten komprimierten Videosignale zeitmultiplexiert, und inklusive Paketen von Signalmodulen, die mit Änderungen von Segmenten der genannten komprimierten Videosignale korreliert und so programmiert sind, dass sie die Ausführung eines interaktiven Programms in Verbindung mit einem vor einer jeweiligen Segmentänderung auftretenden Segment beeinflussen.

9. Vorrichtung nach Anspruch 8, **dadurch gekennzeichnet, dass** das genannte komprimierte Videosignal erste und zweite aufeinander folgende Segmente enthält, wobei das genannte erste Segment mit einem interaktiven Programm assoziiert ist und das genannte zweite Segment nicht mit einem interaktiven Programm assoziiert ist, und wobei der genannte Multiplexer so konditioniert ist, dass er ein Signalmodul enthält, das Codewörter enthält, die die genannte Empfängervorrichtung so konditionieren, dass sie die Verarbeitung des genannten interaktiven Programms in Verbindung mit dem genannten ersten Segment beim Auftreten des genannten zweiten Segments unterbricht.

10. Vorrichtung nach Anspruch 8, **dadurch gekennzeichnet, dass** das genannte komprimierte Videosignal erste und zweite aufeinander folgende Segmente beinhaltet, wobei das genannte erste Segment mit einem ersten interaktiven Programm assoziiert ist und das genannte zweite Segment mit einem zweiten interaktiven Programm assoziiert ist, und wobei der genannte Multiplexer so konditioniert ist, dass er ein Signalmodul beinhaltet, das Codewörter enthält, die die genannte Empfängervorrichtung beim Auftreten des genannten zweiten Segments so konditionieren, dass sie Verarbeitungsstatusdaten in Bezug auf den aktuellen Verarbeitungszustand des genannten ersten interaktiven Programms speichert, dann das genannte erste interaktive Programm entfernt und das genannte zweite interaktive Programm lädt und abarbeitet.

11. Vorrichtung nach Anspruch 8, **dadurch gekennzeichnet, dass** die genannte Quelle von Signalmodulen der genannte Computer ist, der Zeitstempel in die genannten Signalmodule einfügt, wobei diese Zeitstempel mit bestimmten Frames des genannten komprimierten Videosignals assoziiert sind, um die Ausführung des genannten Signalmoduls mit einer Änderung von Segmenten des genannten komprimierten Videosignals zu synchronisieren.

12. Verfahren zum Übertragen von Audio-, Video- und interaktiven Komponenten einer interaktiven Audio-Video-Anwendung, **gekennzeichnet durch**:
Bilden von Transportpaketen von komprimierten Audiosignalen mit jeweiligen Paketen mit einer Nutzlast von Audiosignaldaten und einer Kennung SCIDₐᵢ zum Identifizieren des Transportpakets als Audiokomponentendaten enthaltend;
Bilden von Transportpaketen von komprimierten Videosignalen mit jeweiligen Paketen einschließlich einer Nutzlast von Videodaten und einer Kennung SCIDᵥᵢ zum Identifizieren des Transportpakets als Videokomponentendaten enthaltend;
Erzeugen einer interaktiven Anwendung in Verbindung mit den Audio- oder Videokomponenten;
Segmentieren der interaktiven Anwendung zu Modulen, wobei jeweilige Module ablauffähige Codes oder Anwendungsdaten beinhalten;
Unterteilen von jeweiligen Modulen in ein oder mehrere Übertragungseinheiten, die ganzzahlige Mengen von Transportpaketen enthalten, wobei jedes Transportpaket eine Kennung SCID_{DI} zum Identifizieren des Transportpakets als interaktive Programmkomponenten enthaltend beinhaltet;
Erzeugen eines weiteren Transportpakets für jede jeweilige Übertragungseinheit, wobei das genannte weitere Transportpaket einen Übertragungseinheitskopf beinhaltet, der die in der jeweiligen Übertragungseinheit enthaltenen Informationen beschreibt; und
Zeitmultiplexieren der Audio- und Videokomponentenpakete mit Komponentenpaketen der interaktiven Anwendung, wobei die genannten Komponentenpakete der interaktiven Anwendung in Übertragungseinheitsequenz mit jeweiligen Übertragungseinheiten sind, die von dem genannten weiteren Transportpaket angeführt werden.

13. Verfahren nach Anspruch 12, **dadurch gekennzeichnet, dass** SCID_{DI}, SCIDₐᵢ und SCIDᵥᵢ unterschiedliche Werte sind.

14. Verfahren nach Anspruch 12, **dadurch gekennzeichnet, dass** das genannte weitere Paket ein zusätzliches Transportpaket ist und das Verfahren zum Erzeugen eines zusätzlichen Transportpakets Folgendes beinhaltet:
Bereitstellen des genannten SCID_{Di}, eines vorbestimmten festen Kontinuitätszählwertes CC und eines Datenwortes HD des Zusatzpakettyps und Verketten des Zählwertes CC und des Datenwortes HD des Zusatzpakettyps mit der Kennung SCID_{Di};
Erzeugen einer Zusatzgruppe mit einem Zusatzgruppendatenfeld und einem Zusatzgruppenkopf, wobei der genannte Zusatzgruppenkopf ein Codewort AFID enthält, das in dem genannten Zusatzgruppendatenfeld enthaltene Daten identifiziert, und ein Feld AFS, das die Anzahl von Datenbytes in dem genannten Zusatzgruppendatenfeld anzeigt und den Zusatzgruppenkopf mit den genannten SCID_{Di}, CC und HD Daten verkettet; und
Aufnehmen der genannten Übertragungseinheitskopfinformationen in dem genannten Zusatzgruppendatenfeld.

15. Verfahren nach Anspruch 14, **dadurch gekennzeichnet, dass** das Verfahren zum Erzeugen eines Zusatztransportpakets ferner Folgendes beinhaltet:
Erzeugen weiterer Zusatzgruppenkopffelder, AH, mit einem ersten Feld, das die Zahl von Transportpaketen in der entsprechenden Übertragungseinheit angibt, und einem zweiten Feld, das den Kontinuitätszählwert des ersten Transportpakets einer Übertragungseinheit nach dem Auftreten des genannten Zusatztransportpakets anzeigt.

16. Verfahren nach Anspruch 12, ferner **gekennzeichnet durch** den Schritt des Verschachtelns ganzer Übertragungseinheiten von unterschiedlichen Modulen ausschließlich des Verschachtelns jeweiliger Transportpakete von unterschiedlichen Übertragungseinheiten.

17. Verfahren nach Anspruch 12, das ferner **gekennzeichnet ist durch**:
Bilden eines Verzeichnismoduls, das Daten enthält, die die in einer Anwendung enthaltenen Module anzeigen;
Bilden des Verzeichnismoduls zu einer Übertragungseinheit und zu Transportpaketen; und
Zeitmultiplexieren des Verzeichnismoduls mit den Audio- und Videokomponentenpaketen vor dem Multiplexieren von Modulen der genannten interaktiven Anwendung.

18. Verfahren nach Anspruch 17, das ferner **gekennzeichnet ist durch** wiederholtes Multiplexieren von Übertragungseinheiten des genannten Verzeichnismoduls und der genannten Anwendungsmodule mit den genannten Audio- und Videokomponenten als interaktive Audio-Video-Anwendung.

19. Verfahren nach Anspruch 12 oder 14, das ferner **gekennzeichnet ist durch** Fehlercodieren jedes genannten Moduls und Verketten von Fehlerprüfbits mit jedem solchen Modul.

20. Verfahren nach Anspruch 12, **gekennzeichnet durch**
Erzeugen von Signalmodulen, um Empfängervorrichtungen so zu konditionieren, dass sie die Verarbeitung des genannten interaktiven Programms unterbrechen oder erneuern;
Bilden von Transportpaketen der genannten interaktiven Anwendung und der genannten Signalmodule; und
Zeitmultiplexieren der Transportpakete der Audio- und Videokomponenten mit assoziierten Transportpaketen der interaktiven Anwendung und Einfügen von Signalmodultransportpaketen, die mit Änderungen von Segmenten von segmentierten Videosignalen korreliert sind, um jeweilige Empfänger so zu konditionieren, dass sie eine interaktive Anwendung an jeweiligen Segmentänderungen unterbrechen oder wieder aufnehmen.

21. Verfahren nach Anspruch 20, **gekennzeichnet durch**
Fehlercodieren der genannten Signaldateien und interaktiven Programmdateien und Verketten von Fehlerprüfbits mit entsprechenden fehlercodierten Dateien.

## Revendications

1. Un appareil destiné à générer un programme audiovisuel interactif **caractérisé par** :
une source (18) de paquets de transport de signaux vidéo compressés, une source (21) de paquets de transport de signaux audio compressés;
un ordinateur (10) destiné à générer un programme interactif associé auxdits signaux vidéo et audio compressés, ledit programme interactif étant formé d'une pluralité de modules différents, lesdits modules comprenant des codes exécutables ou des données, et d'un module de répertoire reliant lesdits modules de codes exécutables ou de données,
un appareil processeur de transport (14) destiné à mettre chacun desdits modules en paquets de transport de programmes interactifs et à regrouper des paquets de transport de programmes interactifs provenant de modules respectifs en unités de transmission, ledit appareil processeur de transport (10) formant des paquets de transport auxiliaires comprenant des informations d'en-tête pour chacune des unités de transmission,
un moyen (5) destiné à attribuer des premiers codes d'identification SCIDᵥ à des paquets de transport vidéo respectifs, des deuxièmes codes d'identification SCIDₐ différents à des paquets de transport audio respectifs et des troisièmes codes d'identification SCID_{D} différents à des paquets de transport de programmes interactifs respectifs,
un multiplexeur (16) destiné à un multiplexage par répartition dans le temps desdits paquets de transport de programmes interactifs avec lesdits paquets de transport vidéo et audio de telle manière que ledit programme interactif est inclus de manière répétée auxdits signaux vidéo compressés et auxdits signaux audio compressés.

2. L'appareil selon la Revendication 1 **caractérisé en outre par** un appareil de codage d'erreurs destiné à effectuer un codage d'erreurs indépendant sur lesdites informations d'en-téte pour les unités de transmission respectives dans lesdits paquets de transport auxiliaires.

3. L'appareil selon la Revendication 2 **caractérisé en ce que** des unités de transmission de plusieurs modules peuvent être disponibles simultanément et que ledit processeur de transport est conditionné de façon à entrelacer des unités de transmission complètes provenant de modules différents, mais qu'il est empêché d'entrelacer des paquets de transport provenant d'unités de transmission différentes.

4. L'appareil selon la Revendication 1 **caractérisé en ce que** ledit processeur de transport est conditionné de façon à fournir ledit module de répertoire, lesdites unités de transmission de modules de codes exécutables et lesdites unités de transmission de modules de données dans l'ordre indiqué.

5. L'appareil selon la Revendication 1 **caractérisé en ce que** ledit processeur de transport forme des unités de transmission à partir de nombres entiers de paquets de transport et les paquets de transport d'une unité de transmission pour lesquels les données de module sont insuffisantes sont remplis de mots vides.

6. L'appareil selon la Revendication 1 **caractérisé en outre par** un compteur de continuité destiné à compter modulo N, N étant un entier positif, paquets de transport successifs contenant des données de module à l'exception desdits paquets de transport auxiliaires, dudit processeur de transport comprenant des valeurs de dénombrement successives associées dans lesdits paquets de transport et comprenant une valeur de dénombrement prédéterminée dans tous les paquets de transport auxiliaires.

7. L'appareil selon la Revendication 1 **caractérisé en outre par** un moyen de codage d'erreurs (79) destiné à générer des bits de contrôle d'erreurs sur lesdits modules respectifs et à concaténer les bits de contrôle d'erreurs avec les modules correspondants.

8. L'appareil selon la Revendication 1 **caractérisé en outre par** :
une source de modules de signaux destinée à conditionner un appareil récepteur de façon à suspendre ou reconduire le traitement de programmes interactifs,
où ledit appareil processeur de transport (14) met en paquets lesdits modules, et
ledit multiplexeur (16) multiplexe par répartition dans le temps lesdits paquets de transport de programmes interactifs avec les paquets associés de signaux audio compressés et les segments correspondants desdits signaux vidéo compressés et incluant des paquets de modules de signaux corrélés à des changements de segments desdits signaux vidéo compressés et programmés de façon à réaliser l'exécution d'un programme interactif associé à un segment survenant avant un changement de segment respectif.

9. L'appareil selon la Revendication 8 **caractérisé en ce que** lesdits signaux vidéo compressés comprennent un premier et un deuxième segments successifs, ledit premier segment étant associé à un programme interactif et ledit deuxième segment n'étant pas associé à un programme interactif, et ledit multiplexeur est conditionné de façon à inclure un module de signaux contenant des mots de code qui conditionneront ledit appareil récepteur de façon à suspendre le traitement dudit programme interactif associé audit premier segment lors de la survenue dudit deuxième segment.

10. L'appareil selon la Revendication 8 **caractérisé en ce que** lesdits signaux vidéo compressés comprennent un premier et un deuxième segments successifs, ledit premier segment étant associé à un premier programme interactif et ledit deuxième segment étant associé à un deuxième programme interactif, et où ledit multiplexeur est conditionné de façon à inclure un module de signaux contenant des mots de code qui conditionneront ledit appareil récepteur lors de la survenue dudit deuxième segment, de façon à mettre en mémoire des données d'état de traitement relatives à l'état de traitement actuel dudit premier programme interactif, puis de façon à supprimer ledit premier programme interactif et de charger et d'exécuter ledit deuxième programme interactif.

11. L'appareil selon la Revendication 8 **caractérisé en ce que** ladite source de modules de signaux est ledit ordinateur qui insère des horodatages dans lesdits modules de signaux, lesquels horodatages sont associés à des trames particulières desdits signaux vidéo compressés, afin de synchroniser l'exécution dudit module de signaux avec un changement de segments desdits signaux vidéo compressés.

12. Un procédé destiné à la transmission de composants interactifs, vidéo et audio d'une application audio-vidéo-interactive **caractérisé par** :
la formation de paquets de transport de signaux audio compressés avec des paquets respectifs comprenant une charge utile de données de signaux audio et un identifiant SCIDₐᵢ destiné à identifier le paquet de transport comme contenant des données de composant audio,
la formation de paquets de transport de signaux vidéo compressés avec des paquets respectifs comprenant une charge utile de données vidéo et un identifiant SCIDᵥᵢ destiné à identifier le paquet de transport comme contenant des données de composant vidéo,
la génération d'une application interactive associée aux composants vidéo ou audio,
la segmentation de l'application interactive en modules, ces modules respectifs contenant des codes exécutables ou des données d'application,
la division des modules respectifs en une ou plusieurs unités de transmission comprenant des nombres entiers de paquets de transport, chaque paquet de transport comprenant un identifiant SCID_{Di} destiné à identifier le paquet de transport comme contenant des composants de programmes interactifs,
la génération d'un autre paquet de transport pour chaque unité de transmission respective, ledit autre paquet de transport comprenant un en-tête d'unité de transmission décrivant les informations contenues dans l'unité de transmission respective, et
le multiplexage par répartition dans le temps des paquets de composants vidéo et audio avec des paquets de composant d' application interactive, lesdits paquets de composant d'application interactive se trouvant dans une séquence d'unités de transmission avec des unités de transmission respectives précédées par ledit autre paquet de transport.

13. Le procédé selon la Revendication 12 **caractérisé en ce que** lesdits identifiants SCID_{Di}, SCIDₐᵢ et SCIDᵥᵢ présentent des valeurs différentes.

14. Le procédé selon la Revendication 12 **caractérisé en ce que** ledit autre paquet est un paquet de transport auxiliaire et le procédé de génération d'un paquet de transport auxiliaire comprend :
la fourniture dudit SCID_{Di}, d'une valeur de dénombrement de continuité fixe déterminée CC et d'un mot de données de type paquet auxiliaire HD, et la concaténation de la valeur de dénombrement CC et du mot de données de type paquet auxiliaire HD avec l'identifiant SCID_{Di},
la génération d'un groupe auxiliaire comprenant un champ de données de groupe auxiliaire et un en-tête de groupe auxiliaire, ledit en-tête de groupe auxiliaire comprenant un mot de code AFID identifiant les données incluses dans ledit champ de données de groupe auxiliaire et un champ AFS indiquant le nombre d'octets de données dans ledit champ de données de groupe auxiliaire, et la concaténation de l'en-tête de groupe auxiliaire avec ledit identifiant SCID_{Di}, et les données CC et HD, et
l'inclusion desdites informations d'en-tête d'unité de transmission dans ledit champ de données de groupe auxiliaire.

15. Le procédé selon la Revendication 14 **caractérisé en ce que** le procédé de génération d'un paquet de transport auxiliaire comprend en outre :
la génération d'autres champs d'en-tête de groupe auxiliaire, AH, comprenant un premier champ qui indique le nombre de paquets de transport dans l'unité de transmission correspondante, et un deuxième champ indiquant la valeur de dénombrement de continuité du premier paquet de transport d'une unité de transmission après la survenue dudit paquet de transport auxiliaire.

16. Le procédé selon la Revendication 12 **caractérisé en outre par** l'opération d'entrelacement d'unités de transmission entières de modules différents mais excluant l'entrelacement de paquets de transport respectifs d'unités de transmission différentes.

17. Le procédé selon la Revendication 12 **caractérisé en outre par** :
la formation d'un module de répertoire qui contient des données indiquant les modules inclus dans une application,
l'intégration du module de répertoire dans une unité de transmission et des paquets de transport, et
le multiplexage par répartition dans le temps du module de répertoire avec les paquets de composant audio et vidéo avant le multiplexage des modules de ladite application interactive.

18. Le procédé selon la Revendication 17 **caractérisé en outre par** le multiplexage répété des unités de transmission dudit module de répertoire et desdits modules d'application avec lesdits composants vidéo et audio sous la forme d'une application audio-vidéo-interactive.

19. Le procédé selon la Revendication 12 ou 14 **caractérisé en outre par** un codage d'erreurs de chacun desdits modules et une concaténation des bits de contrôle d'erreurs avec chacun de ces modules.

20. Le procédé selon la Revendication 12 **caractérisé par**
la génération de modules de signaux destinée à conditionner un appareil récepteur de façon à suspendre ou reconduire le traitement dudit programme interactif,
la formation de paquets de transport de ladite application interactive et desdits modules de signaux, et
la multiplexage par répartition dans le temps des paquets de transport de composants vidéo et audio avec les paquets de transport d'applications interactives associés et l'insertion de paquets de transport de modules de signaux corrélés à des changements de segments des signaux vidéo segmentés de façon à conditionner des récepteurs respectifs afin de suspendre ou de reprendre une application interactive à des changements de segment respectifs.

21. Le procédé selon la Revendication 20 **caractérisé par**
le codage d'erreurs desdits fichiers de signaux et desdits fichiers de programmes interactifs et la concaténation des bits de contrôle d'erreurs avec les fichiers codés d'erreurs correspondants.
